# EUROPÄISCHE PATENTSCHRIFT

(11) **EP 4 137 642 B1**
(45) Veröffentlichungstag und Bekanntmachung des Hinweises auf die Patenterteilung: **27.03.2024**
(21) Anmeldenummer: 22191109.2
(22) Anmeldetag: 19.08.2022
(51) Int. Cl.: E02F 9/08, B60K 15/073, B66F 9/075, B60K 15/07, B60K 15/063, B60K 15/06, B60K 15/03

(54) **ARBEITSMASCHINE**
A WORKING MACHINE
MACHINE DE TRAVAIL

(30) Priorität: 19.08.2021 DE 102021121512; 09.05.2022 DE 102022111432
(43) Veröffentlichungstag der Anmeldung: 22.02.2023
(73) Patentinhaber: Liebherr-Werk Bischofshofen GmbH, 5500 Bischofshofen (AT)
(72) Erfinder: KNAPP, Hans, 5500 Bischofshofen (AT); HEUGENHAUSER, Gerald, 5622 Goldegg (AT); KIEGERL, Christoph, 5453 Werfenweng (AT); DENGG, Reinhard, 5580 Tamsweg (AT); SAGORZ, David, 5633 Bad Hofgastein (AT)
(74) Vertreter: Herrmann, Uwe

(56) Entgegenhaltungen:
- EP-A1- 1 215 163
- EP-A1- 3 865 758
- EP-A2- 1 762 536
- WO-A1-2008/034333

## Beschreibung

Die vorliegende Erfindung betrifft eine Arbeitsmaschine, insbesondere einen Radlader, mit einer Kabine für den Führer der Arbeitsmaschine.

Aus dem Stand der Technik sind Arbeitsmaschinen bekannt, deren Fahrantrieb durch einen Verbrennungsmotor, üblicherweise durch einen Dieselmotor gebildet wird. Aus der EP 1 762 536 A2 ist eine eine mobile Arbeitsmaschine bekannt, insbesondere Gegengewichtsgabelstapler, mit mindestens einem druckbeaufschlagten Wasserstofftank unterhalb der Kabine.

Im Zuge der Decarbonisierung stellt sich die Frage nach alternativen Antriebskonzepten bzw. nach alternativen Energieträgern.

Der vorliegenden Erfindung liegt somit die Aufgabe zugrunde, eine Arbeitsmaschine der eingangs genannten Art dahingehend weiterzubilden, dass diese die Anforderungen eines möglichst geringen CO₂ Ausstoßes erfüllt.

Diese Aufgabe wird durch eine Arbeitsmaschine mit den Merkmalen des Anspruchs 1 gelöst.

Danach ist vorgesehen, dass die Arbeitsmaschine über einen Antrieb verfügt, der mit Wasserstoff betreibbar ist und dass ein oder mehrere Tanks zur Aufnahme von Wasserstoff vorhanden sind, wobei der oder die Tanks unterhalb der Kabine und in der Draufsicht auf die Arbeitsmaschine neben der Kabine der Arbeitsmaschine angeordnet sind und dass eine Panzerung vorhanden ist, die den Tank teilweise oder vollständig umgibt.

Der vorliegenden Erfindung liegt somit der Gedanke zugrunde, eine wasserstoffbetriebene Arbeitsmaschine bereitzustellen, wobei gleichzeitig sichergestellt ist, dass der Wasserstofftank
1. hinreichend vor Beschädigungen geschützt ist,
2. möglichst weit weg von heißen oder zündfähigen Umgebungen angeordnet ist,
3. unter bestmöglicher Rücksicht auf die Rundumsicht angeordnet ist und
4. möglichst wenige verschiedene Einbauorte, ggf. durch Anordnung mehrerer einzelner Tanks in einem Bereich, im Fahrzeug notwendig sind und
5. für Wartungs- oder Reparaturarbeiten gut zugänglich ist.

Aufgrund der Anordnung des oder der Tanks neben und unter der Kabine ist sichergestellt, dass die Sicht des in der Kabine befindlichen Maschinenführers nicht beeinträchtigt wird.

Die erfindungsgemäße Anordnung des oder der Tanks bringt den weiteren Vorteil mit sich, dass kein völlig neues Fahrzeugkonzept erarbeitet werden muss. Vielmehr kann die bekannte Fahrzeugstruktur größtenteils beibehalten werden.

Um einen ausreichenden Schutz sicherzustellen, ist eine massive Verkleidung in Form einer Panzerung vorgesehen.

Die Arbeitsmaschine kann zwei oder mehr Achsen aufweisen, wobei der Tank vorzugsweise im Bereich zwischen den Achsen, d.h. hinter der Vorderachse und vor der Hinterachse angeordnet ist.

Im Vergleich zu herkömmlichen Arbeitsmaschinen mit starrem Rahmen befindet sich beim Radlader im Bereich zwischen den Achsen der Knickbereich. Während der Fahrt ändert sich durch Lenkvorgänge ständig die Lage des Vorder- und Hinterwagens zueinander. Darauf ist bei der Gestaltung der Panzerung Rücksicht zu nehmen.

Vorzugsweise ist vorgesehen, dass die Arbeitsmaschine einen Rahmen aufweist und dass die Panzerung außerhalb des Rahmens angeordnet ist. Dieser Bereich ist im Gegensatz zur Heck- und Frontseite der Arbeitsmaschine vor äußeren Einflüssen gut geschützt.

Vorzugsweise ist die Panzerung in der Nähe der tragenden Struktur außerhalb vom Fahrzeugrahmen angeordnet, wodurch sich ein ebenso hohes Maß an Schutz vor mechanischen Beschädigungen durch äußere Einflüsse umsetzen lässt, wie bei Anordnung des oder der Tanks innerhalb des Fahrzeugrahmens, wo die Wasserstofftanks aufgrund des besonders hohen Schutzbedarfes üblicherweise angeordnet sind.

Eine Anordnung des oder der Tanks innerhalb des Fahrzeugrahmens ist jedoch von der vorliegenden Erfindung ebenfalls umfasst.

Vorzugsweise ist auf beiden Seiten der Kabine oder des Fahrzeug-Grundrahmens, d.h. rechts und links wenigstens ein Tank zur Aufnahme von Wasserstoff jeweils mit der Panzerung angeordnet.

Bevorzugt ist somit der Einbau von Tanks zur Speicherung von Wasserstoff im geschützten Bereichen zwischen den Antriebsachsen, jeweils links und rechts außen im Bereich unter der Fahrerkabine des wasserstoffbetriebenen Radladers oder einer sonstigen Arbeitsmaschine.

Der Tank kann geeignet sein, Wasserstoff in flüssiger und/oder gasförmiger Form und/oder in gebundener Form, z.B. als Metallhydrid zu speichern.

In einer weiteren Ausgestaltung der Erfindung ist vorgesehen, dass die Arbeitsmaschine Trittstufen zum Aufstieg in die Kabine aufweist und dass sich die Trittstufen im Heckbereich der Arbeitsmaschine befinden.

Der oder die Tanks mit Panzerung können den bisherigen Einbauort des Aufstieges in die Fahrerkabine in Anspruch nehmen, sodass die Trittstufen für den Aufstieg in dieser Ausführungsform stattdessen im Fahrzeugheck, vorzugsweise im Bereich der Ballastgewichte untergebracht werden.

Denkbar ist es, dass die Arbeitsmaschine über einen Verbrennungsmotor zur Verbrennung von Wasserstoff verfügt.

Denkbar ist auch ein Brennstoffzellenantrieb mit elektrifiziertem Antriebsstrang zum Antrieb eines Elektromotors, der als Fahrmotor für den Radlader dient.

In einer weiteren Ausgestaltung der Erfindung weist der Tank eine langgestreckte Form auf und kann stehend angeordnet sein. Der Tank kann in beliebiger Weise angeordnet sein.

Vorteilhaft ist es, wenn der Tank nicht fest mit der Arbeitsmaschine in Verbindung steht, sondern austauschbar ist. Dies bringt den Vorteil des Austauschs eines defekten Tanks mit sich oder auch die Möglichkeit, einen leeren Tank einfach durch einen vollen Tank auszutauschen.

Es wird darauf hingewiesen, dass die vorliegende Erfindung sowohl eine Arbeitsmaschine mit einem leeren Tank als auch mit einem wasserstoffgefüllten Tank umfasst.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente. Weiterhin können alle hierin beschriebenen Merkmale der Erfindung beliebig miteinander kombiniert oder voneinander isoliert beansprucht werden.

Weitere Einzelheiten und Vorteile der Erfindung werden anhand eines in der Zeichnung dargestellten Ausführungsbeispiels näher erläutert.

Es zeigen:
- Figur 1:: eine schematische Seitenansicht eines Radladers von rechts,
- Figur 2:: eine schematische Seitenansicht des Radladers von links,
- Figur 3:: eine schematische Draufsicht auf den Radlader,
- Figur 4:: eine schematische Ansicht des Radladers von unten und
- Figur 5:: eine schematische Ansicht des Radladers von links mit nach hinten versetztem Aufstieg.

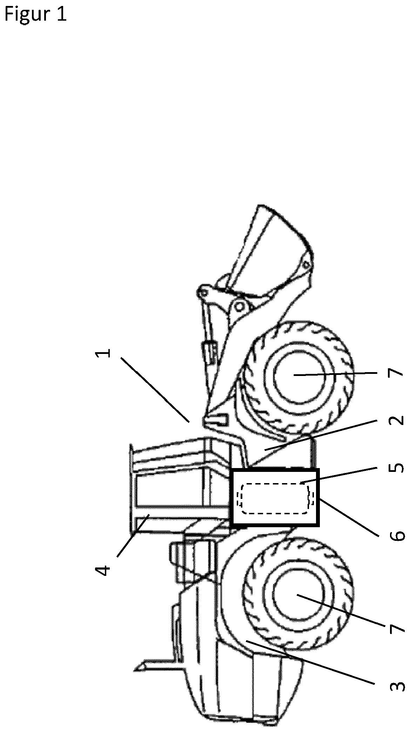

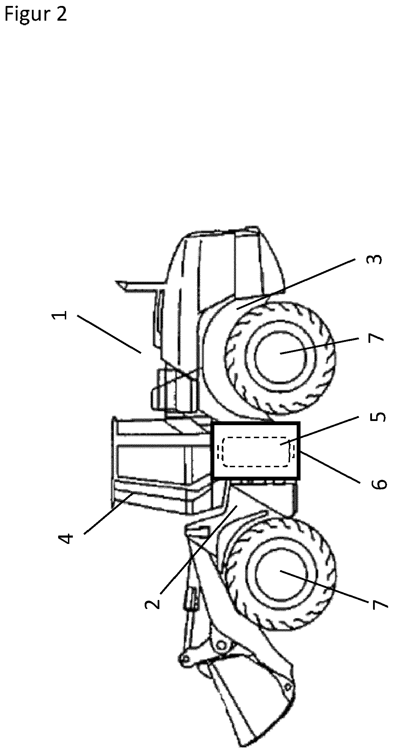

Die Figuren 1 und 2 zeigen in Seitenansichten einen Radlader 1 gemäß der Erfindung.

Der Radlader weist einen Vorderwagen 2 und einen Hinterwagen 3 auf, die gelenkig miteinander verbunden sind.

Mit dem Bezugszeichen 4 ist die Kabine für den Führer des Radladers gekennzeichnet.

Der Radlader verfügt des Weiteren über eine Vorderachse und eine Hinterachse, die beide mit dem Bezugszeichen 7 gekennzeichnet sind.

Wie dies aus den Figuren 1 und 2 hervorgeht, befinden sich zu beiden Seiten des Radladers jeweils ein Wasserstofftank 5, der jeweils von einer Panzerung 6 umgeben ist.

Der Tank 5 und die Panzerung 6 befinden sich auf beiden Seiten des Radladers am Hinterwagen 3 in einem Bereich unter der Kabine 4 und zwischen den beiden Achsen 7.

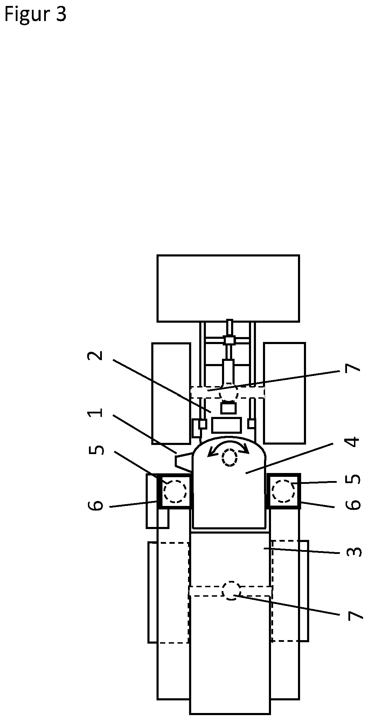

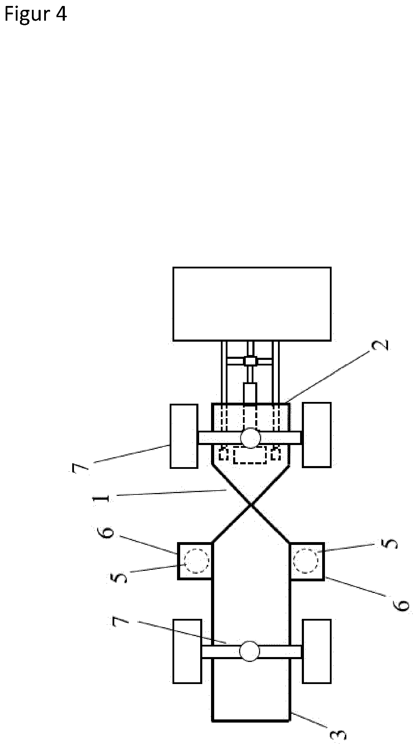

Aus der Draufsicht gemäß Figur 3 und aus der Darstellung von unten gemäß Figur 4 ergibt sich, dass die beiden Tanks 5 mit der jeweiligen Panzerung 6 neben der Kabine 4 angeordnet sind, d.h. relativ zur Kabine 4 zur Seite hin versetzt angeordnet sind.

Die Panzerung 6 umgibt die Tanks 5 jeweils vollumfänglich, d.h. an allen Seiten.

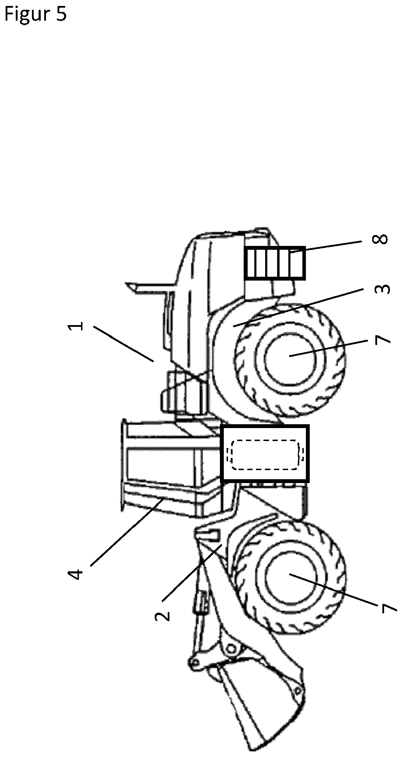

Figur 5 zeigt eine Ausführungsform, die hinsichtlich der Ausführung der der Figuren 1 und 2 entspricht, allerdings mit dem Unterschied, dass der Aufstieg 8 für den Maschinenführer im Heckbereich, d.h. noch hinter der Hinterachse 7 angeordnet ist.

Der Maschinenführer läuft nach dem Aufstieg über die hintere Radeinfassung bzw. Karosserieteile nach vorne zur Kabine 4.

## Patentansprüche

1. Arbeitsmaschine, insbesondere Radlader, mit einer Kabine für den Führer der Arbeitsmaschine, wobei die Arbeitsmaschine über einen Antrieb verfügt, der mit Wasserstoff betreibbar ist und dass ein oder mehrere Tanks zur Aufnahme von Wasserstoff vorhanden sind, wobei Komponenten zur Aufnahme der Tanks vorhanden sind, **dadurch gekennzeichnet dass** der oder die Tanks unterhalb der Kabine und in der Draufsicht auf die Arbeitsmaschine neben der Kabine der Arbeitsmaschine angeordnet sind, wobei die Komponenten zur Aufnahme der Tanks keine direkte mechanische Verbindung zur Kabine aufweisen und dass eine Panzerung vorhanden ist, die den Tank teilweise oder vollständig umgibt.

2. Arbeitsmaschine nach Anspruch 1, **dadurch gekennzeichnet, dass** die Arbeitsmaschine zwei oder mehr Achsen aufweist und dass der wenigstens eine Tank, insbesondere im Knickbereich, zwischen den Achsen angeordnet ist.

3. Arbeitsmaschine nach Anspruch 1 oder 2, **dadurch gekennzeichnet, dass** die Arbeitsmaschine einen Rahmen aufweist und dass die Panzerung außerhalb des Rahmens angeordnet ist.

4. Arbeitsmaschine nach einem der vorhergehenden Ansprüche, **dadurch gekennzeichnet, dass** auf beiden Seiten des Fahrzeugs wenigstens ein Tank zur Aufnahme von Wasserstoff mit der Panzerung angeordnet ist.

5. Arbeitsmaschine nach einem der vorhergehenden Ansprüche, **dadurch gekennzeichnet, dass** der Tank geeignet ist, Wasserstoff in flüssiger und/oder gasförmiger Form und/oder in gebundener Form zu speichern.

6. Arbeitsmaschine nach einem der vorhergehenden Ansprüche, **dadurch gekennzeichnet, dass** die Arbeitsmaschine Trittstufen zum Aufstieg in die Kabine aufweist und dass sich die Trittstufen im Heckbereich der Arbeitsmaschine befinden.

7. Arbeitsmaschine nach einem der vorhergehenden Ansprüche, **dadurch gekennzeichnet, dass** die Arbeitsmaschine über einen Verbrennungsmotor zur Verbrennung von Wasserstoff verfügt.

8. Arbeitsmaschine nach einem der vorhergehenden Ansprüche, **dadurch gekennzeichnet, dass** die Arbeitsmaschine über eine Brennstoffzelle zur Erzeugung von elektrischer Energie mittels Wasserstoff verfügt.

9. Arbeitsmaschine nach einem der vorhergehenden Ansprüche, **dadurch gekennzeichnet, dass** der Tank eine langgestreckte Form aufweist.

10. Arbeitsmaschine nach einem der vorhergehenden Ansprüche, **dadurch gekennzeichnet, dass** der Tank nicht fest mit der Arbeitsmaschine in Verbindung steht, sondern austauschbar ist.

## Claims

1. Work machine, more particularly a wheeled loader, having a cab for the operator of the work machine, wherein
the work machine has a drive which can be operated with hydrogen and that one or more tanks for receiving hydrogen are provided, wherein components for receiving the tanks are provided,
**characterized in that**
the tank or tanks are arranged below the cab and, when the work machine is viewed from above, next to the cab of the work machine, wherein the components for receiving the tanks do not have a direct mechanical connection to the cab, and that an armor is provided which partially or completely surrounds the tank.

2. Work machine according to claim 1, **characterized in that** the work machine has two or more axles, and that at least one tank is arranged, more particularly in the articulation region, between the axles.

3. Work machine according to claim 1 or 2, **characterized in that** the work machine has a frame and that the armor is arranged outside of the frame.

4. Work machine according to one of the preceding claims, **characterized in that** on both sides of the vehicle, at least one tank for receiving hydrogen and having the armor is arranged.

5. Work machine according to one of the preceding claims, **characterized in that** the tank is suitable for storing hydrogen in liquid and/or gaseous form and/or in bonded form.

6. Work machine according to one of the preceding claims, **characterized in that** the work machine has steps for accessing the cab and the steps are located in the rear region of the work machine.

7. Work machine according to one of the preceding claims, **characterized in that** the work machine has an internal combustion engine for the combustion of hydrogen.

8. Work machine according to one of the preceding claims, **characterized in that** the work machine has a fuel cell for generating electrical energy by means of hydrogen.

9. Work machine according to one of the preceding claims, **characterized in that** the tank has an elongate form.

10. Work machine according to one of the preceding claims, **characterized in that** the tank is not fixedly connected to the work machine and is instead replaceable.

## Revendications

1. Machine de travail, en particulier chargeur sur roues, avec une cabine pour le conducteur de la machine de travail, dans laquelle
la machine de travail dispose d'un entraînement, qui peut fonctionner à l'hydrogène et un ou plusieurs réservoirs destinés à recevoir de l'hydrogène sont présents, dans laquelle des composants destinés à recevoir les réservoirs sont présents,
**caractérisée en ce que**
le ou les réservoirs sont disposés sous la cabine et, sur la vue d'en haut sur la machine de travail, à côté de la cabine de la machine de travail, dans laquelle les composants destinés à recevoir les réservoirs ne présentent aucun raccordement mécanique direct avec la cabine, et qu'un blindage, qui entoure en partie ou en totalité le réservoir, est présent.

2. Machine de travail selon la revendication 1, **caractérisée en ce que** la machine de travail présente deux ou plusieurs essieux, et que l'au moins un réservoir est disposé entre les essieux, en particulier dans la zone d'articulation.

3. Machine de travail selon la revendication 1 ou 2, **caractérisée en ce que** la machine de travail présente un châssis, et que le blindage est disposé à l'extérieur du châssis.

4. Machine de travail selon l'une quelconque des revendications précédentes, **caractérisée en ce qu'**au moins un réservoir destiné à recevoir de l'hydrogène est disposé avec le blindage sur les deux côtés du véhicule.

5. Machine de travail selon l'une quelconque des revendications précédentes, **caractérisée en ce que** le réservoir est adapté pour stocker de l'hydrogène sous une forme liquide et/ou gazeuse et/ou sous une forme liée.

6. Machine de travail selon l'une quelconque des revendications précédentes, **caractérisée en ce que** la machine de travail présente des marches pour monter dans la cabine, et que les marches se trouvent dans la zone de hayon de la machine de travail.

7. Machine de travail selon l'une quelconque des revendications précédentes, **caractérisée en ce que** la machine de travail dispose d'un moteur à combustion pour la combustion de l'hydrogène.

8. Machine de travail selon l'une quelconque des revendications précédentes, **caractérisée en ce que** la machine de travail dispose d'une pile à combustible destinée à produire de l'énergie électrique au moyen d'hydrogène.

9. Machine de travail selon l'une quelconque des revendications précédentes, **caractérisée en ce que** le réservoir présente une forme étirée en longueur.

10. Machine de travail selon l'une quelconque des revendications précédentes, **caractérisée en ce que** le réservoir n'est pas raccordé de manière solidaire à la machine de travail, mais peut être remplacé.
